# EUROPEAN PATENT SPECIFICATION

(11) **EP 3 494 813 B1**
(45) Date of publication and mention of the grant of the patent: **02.03.2022**
(21) Application number: 17838729.6
(22) Date of filing: 09.08.2017
(51) Int. Cl.: H02M 3/158, H02M 1/00

(54) **ELECTRONIC CIGARETTE DRIVE CIRCUIT AND ELECTRONIC CIGARETTE**
ANSTEUERUNGSSCHALTUNG FÜR ELEKTRONISCHE ZIGARETTE SOWIE ELEKTRONISCHE ZIGARETTE
CIRCUIT D'ATTAQUE DE CIGARETTE ÉLECTRONIQUE ET CIGARETTE ÉLECTRONIQUE

(30) Priority: 10.08.2016 CN 201620864293 U
(43) Date of publication of application: 12.06.2019
(73) Proprietor: Joyetech Europe Holding GmbH, 6303 Zug (CH)
(72) Inventor: QIU, Weihua, Changzhou Jiangsu 213125 (CN)
(74) Representative: Zaboliene, Reda
(86) International application number: PCT/CN2017/096619
(87) International publication number: WO 2018/028599

(56) References cited:
- WO-A1-2013/102879
- WO-A1-2014/119040
- WO-A1-2014/173293
- CN-A- 104 055 224
- CN-A- 104 783 332
- CN-A- 105 011 375
- CN-U- 203 849 569
- CN-U- 204 012 951
- CN-U- 205 922 901
- US-A- 5 528 132
- US-A1- 2007 210 774
- US-A1- 2009 039 852
- US-A1- 2014 299 137
- US-A1- 2015 035 512
- "ADP3110A; Dual Bootstrapped, 12V MOSFET Driver with Output Disable", Semiconductor Components Industries,LLC,2008, 1 August 2008 (2008-08-01), pages 1-8, XP055116840, Retrieved from the Internet: URL:http://www.onsemi.com/pub_link/Collate ral/ADP3110A-D.PDF [retrieved on 2014-05-08]
- Linear Technology: "10V, High Efficiency, Synchronous, No Rsense Buck-Boost Controller", , 1 January 2007 (2007-01-01), XP055673808, Retrieved from the Internet: URL:https://www.analog.com/media/en/techni cal-documentation/data-sheets/3785fc.pdf [retrieved on 2020-03-04]

## Description

### TECHNICAL FIELD

The present disclosure relates to the technical field of electronic cigarette, and in particular to a drive circuit for electronic cigarettes.

### BACKGROUND

Currently, the drive circuit of electronic cigarettes often use the MCU (micro control unit, also called single-chip microcomputer) to directly control the switching time of the MOS transistor, or use a buck-boost IC to control the switching time of the MOS transistor. However, when the MCU directly controls the switching time of the MOS transistor, the output voltage of the circuit is low (not exceeding the battery voltage), and the output voltage cannot be adjusted. When using the buck-boost IC, the voltage regulation function can be realized, but the output power is also relatively small, which still cannot meet the requirements of high-power output for electronic cigarettes. With the improvement of user demand, the driving scheme of traditional low-power electronic cigarette cannot meet the market requirements for the product's taste, smoke quantity and product operability. Therefore, there is a need to develop a solution that outputs a relatively high power and an adjustable voltage to improve the performance of electronic cigarettes.

### SUMMARY

An object of the present disclosure is to provide a drive circuit for electronic cigarettes. The drive circuit can output a large driving power and the voltage of the electronic cigarette drive circuit can be adjusted to improve the performance of the electronic cigarettes.

A drive circuit for electronic cigarettes includes an MCU, a buck-boost drive circuit, a first sampling circuit, a second sampling circuit, and a power source. The buck-boost drive circuit is electrically connected to the MCU. The MCU and the buck-boost drive circuit are respectively electrically connected to the power source. The buck-boost drive circuit comprises a first half bridge drive circuit and a second half bridge drive circuit respectively electrically connected to the MCU. The first half bridge drive circuit is electrically connected to the second half bridge drive circuit through an inductor. One end of the first sampling circuit is electrically connected to an input terminal of the first half bridge drive circuit, through which the power source supplies power to the first half bridge drive circuit; the other end of the first sampling circuit is electrically connected to the MCU. One end of the second sampling circuit is electrically connected to an output terminal of the second half bridge drive circuit, and the other end of the second sampling circuit is electrically connected to the MCU. The drive circuit further comprises a boosting circuit, the boosting circuit is respectively electrically connected to the MCU and the power source, the boosting circuit is further respectively electrically connected to the first half bridge drive circuit and the second half bridge drive circuit. The first sampling circuit detects an input voltage of the first half bridge drive circuit supplied by the power source, the second sampling circuit detects an output voltage of the second half bridge drive circuit, the MCU sends a first voltage control signal and a second voltage control signal according to the voltages fed back by the first sampling circuit and the second sampling circuit. The boosting circuit boosts a voltage of the power source according to the first voltage control signal, to provide an operating voltage for the buck-boost drive circuit. The buck-boost drive circuit boosts or lowers a load voltage according to the second voltage control signal. The first half bridge drive circuit comprises a first half bridge drive chip U13, a capacitor C14, a diode D9 and two first N-type MOS transistors U10, U12; the second half bridge drive circuit comprises a second half bridge drive chip U14, a capacitor C31, a diode D5 and two second N-type MOS transistors U11, U15. The IN pin and the OD pin of the first half bridge driver chip U13 are connected to the MCU, the VCC pin of the first half bridge drive chip U13 is connected to the boosting circuit, the VCC pin of the first half bridge drive chip U13 is further connected to the BST pin of the first half bridge drive chip U13 through the diode D9, the capacitor C14 is connected between the BST pin of the first half bridge drive chip U13 and the SWN pin of the first half bridge drive chip U13, the DRVH pin of the first half bridge drive chip U13 is connected to the G pin of the first N-type MOS transistor U10, the DRVL pin of the first half bridge drive chip U13 is connected to the G pin of the first N-type MOS transistor U12, the SWN pin of the first half bridge drive chip U13 is connected to a first end of the inductor. The IN pin and the O̅D̅ pin of the second half bridge driver chip U14 are connected to the MCU, the VCC pin of the second half bridge drive chip U14 is connected to the boosting circuit, the VCC pin of the second half bridge drive chip U14 is further connected to the BST pin of the second half bridge drive chip U14 through the diode D5, the capacitor C31 is connected between the BST pin of the second half bridge drive chip U14 and the SWN pin of the second half bridge drive chip U14, the DRVH pin of the second half bridge drive chip U14 is connected to the G pin of the second N-type MOS transistor U11, the DRVL pin of the second half bridge drive chip U14 is connected to the G pin of the second N-type MOS transistor U15, the SWN pin of the second half bridge drive chip U14 is connected to a second end of the inductor. The S pin of the first N-type MOS transistor U10 and the D pin of the first N-type MOS transistor U12 are connected to the first end of the inductor, the S pin of the second N-type MOS transistor U11 and the D pin of the second N-type MOS transistor U15 are connected to the second end of the inductor. The D pin of the first N-type MOS transistor U10 is connected to the power source, the D pin of the second N-type MOS transistor U11 is used to supply a voltage VOUT1 to a load.

A model of the inductor is MS 1004-R68M.

In one embodiment, the drive circuit further includes a voltage stabilizing circuit, the voltage stabilizing circuit is respectively electrically connected to the MCU and the power source.

The model of the first half bridge drive chip and the model of the second half bridge drive chip are both ADP3110A.

The model of the first N-type MOS transistors and the model of the second N-type MOS transistors are SIRA04DP.

An electronic cigarette is also provided having any one of the above-mentioned drive circuits.

With the above solution, the first sampling circuit detects the input voltage of the power source to the first half bridge drive circuit, the second sampling circuit detects the output voltage of the second half bridge drive circuit, the MCU sends the first voltage control signal and the second voltage control signal according to the voltages fed back by the first sampling circuit and the second sampling circuit; the boosting circuit is configured to increase a voltage of the power source according to the first voltage control signal of the MCU, to provide a working voltage for the buck-boost drive circuit; the buck-boost drive circuit boosts or lowers a load voltage thereof according to the second voltage control signal. Thus, as long as the PWM duty cycle is adjusted by the MCU, the output voltage can be increased, and the output voltage can be adjusted according to different requirements. Therefore, the drive circuit can output a large driving power and the voltage of the electronic cigarette drive circuit can be adjusted to improve the performance of the electronic cigarettes. In addition, a model of the MOS transistor is SIRA04DP, which has a small on-resistance and a high power, and can minimize the loss in the power conversion of the electronic cigarette.

In order to achieve the above and related purposes, one or more aspects of the present disclosure include the features which will be described in detail in the following and particularly pointed out in the claims. The following description and the drawings describes some illustrative aspects of the present disclosure. However, these aspects are only a part of the ways using the principles of the present disclosure.

### BRIEF DESCRIPTION OF THE DRAWINGS

According to the following detailed description referring to the drawings, the above and other objects, features and advantages of the present disclosure will be more apparent.
FIG. 1 is a schematic block diagram illustrating one embodiment of a drive circuit for an electronic cigarette according to the present disclosure.
FIG. 2 is a schematic block diagram illustrating another embodiment of a drive circuit for an electronic cigarette.
FIG. 3 is an electrical schematic diagram illustrating a first half bridge drive circuit and a second half bridge drive circuit.

The same reference numbers in all the drawings indicate similar or corresponding features or functions.

The corresponding table of component-reference number is as follows:

| Component | Reference number |
|---|---|
| First half bridge drive chip | U13 |
| Second half bridge drive chip | U14 |
| First N-type MOS transistor | U10, U12 |
| Second N-type MOS transistor | U11, U15 |
| Inductor | L1 |

| | |
|---|---|
| Capacitor | C5, C6, C8, C11, C14, C20, C30, C31 |
| Diode | D5, D9 |
| MCU | 110 |
| Buck-boost drive circuit | 120 |
| Power source | 130 |
| Boosting circuit | 140 |
| Voltage stabilizing circuit | 150 |
| First sampling circuit | 160 |
| Second sampling circuit | 170 |
| First half bridge drive circuit | 122 |
| Second half bridge drive circuit | 124 |
| Inductor | 126 |

### DETAILED DESCRIPTION OF PREFERRED EMBODIMENTS

Various aspects of the present disclosure will be described in the following. It should be understood that, the teachings herein may be embodied in a variety of forms, and any specific structures, functions or both disclosed herein are merely representative. Based on the teachings herein, one skilled in the art will be appreciated that one aspect disclosed herein can be implemented independently of any other aspects, and two or more of these aspects can be combined in various ways. For example, an apparatus or a method can be implemented by using any aspects set forth herein. In addition, the apparatus or the method can be implemented by using other structures and functions, or structures and functions except for one or more aspects set forth herein or one or more aspects not set forth herein. Furthermore, any aspects set forth herein can include at least one element of the claims.

Various embodiments of the present disclosure will be described in the following with reference to the drawings.

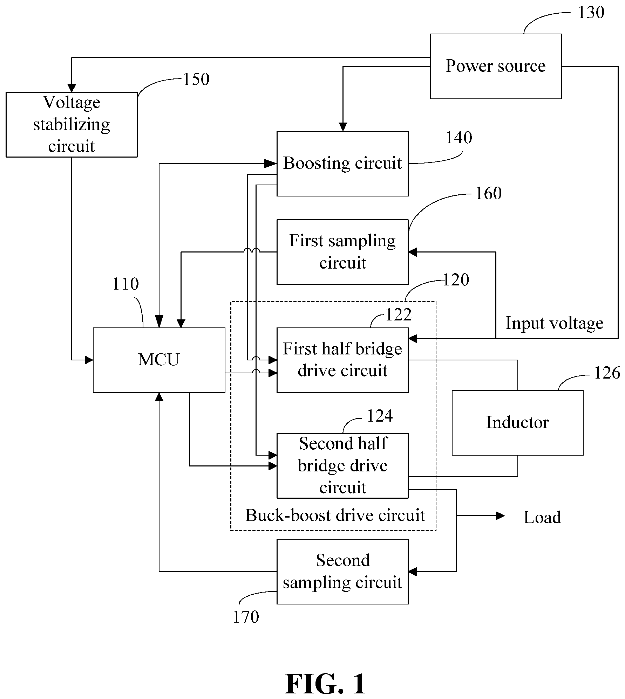

FIG. 1 shows a schematic block diagram of one embodiment of a drive circuit for electronic cigarettes. The drive circuit includes an MCU 110, a buck-boost drive circuit 120, a power source 130, a boosting circuit 140, a voltage stabilizing circuit 150, a first sampling circuit 160 and a second sampling circuit 170. The buck-boost drive circuit 120, the boosting circuit 140 and the voltage stabilizing circuit 150 are respectively electrically connected to the MCU 110. The buck-boost drive circuit 120 and the MCU 110 are respectively electrically connected to the power source 130. The boosting circuit 140, the voltage stabilizing circuit 150 and the buck-boost drive circuit 120 are respectively electrically connected to the power source 130. An output terminal of the boosting circuit 140 is electrically connected to the buck-boost drive circuit 120.

The buck-boost drive circuit 120 includes a first half bridge drive circuit 122 and a second half bridge drive circuit 124 respectively electrically connected to the MCU 110. The first half bridge drive circuit 122 is electrically connected to the second half bridge drive circuit 124 through an inductor 126. One end of the first sampling circuit 160 is electrically connected to an input terminal of the first half bridge drive circuit 122, through which the power source 130 supplies power to the first half bridge drive circuit 122; the other end of the first sampling circuit 160 is electrically connected to the MCU 110. One end of the second sampling circuit 170 is electrically connected to an output terminal of the second half bridge drive circuit 124, and the other end of the second sampling circuit 170 is electrically connected to the MCU 110.

Further, the power source 130 inputs a voltage to the boosting circuit 140, the voltage stabilizing circuit 150 and the buck-boost drive circuit 120. The voltage stabilizing circuit 150 provides a stable operating voltage for the MCU 110. The boosting circuit 140 is configured for receiving a first voltage control signal from the MCU 110 to boost a voltage of the power source 130, in order to provide an operating voltage for the buck-boost drive circuit 120. The first sampling circuit 160 is configured to detect an input voltage of the buck-boost drive circuit 120 supplied by the power source 130 (i.e., detecting the voltage of the input terminal of the first half bridge drive circuit 122 supplied by the power source 130), and feed back to the MCU 110. The second sampling circuit 170 is configured to detect an output voltage of the buck-boost drive circuit 120 (i.e., detecting the voltage of the output terminal of the second half bridge drive circuit 124) and feed back to the MCU 100. The MCU 110 is configured for receiving the voltages fed back by the sampling circuits, and sending the first voltage control signal and a second voltage control signal according to the feedback voltages. The buck-boost drive circuit 120 is configured to raise or lower a load voltage according to the second voltage control signal.

With the above solution, the MCU 110 adopts the first sampling circuit 160 to detect the input voltage of the buck-boost drive circuit 120 supplied by the power source 130, and adopts the second sampling circuit 170 to detect the output voltage of the buck-boost drive circuit 120, to generate the first voltage control signal and the second voltage control signal; the boosting circuit 140 boosts a voltage of the power source 130 according to the first voltage control signal of the MCU 110, to provide an operating voltage for the buck-boost drive circuit 120; the buck-boost drive circuit 120 boosts or lowers a load voltage thereof according to the second voltage control signal. Thus, as long as the PWM duty cycle is adjusted by the MCU 110, the output voltage can be boosted, and the output voltage can be adjusted according to different requirements. Therefore, the output of large driving power can be realized, the voltage of the drive circuit of the electronic cigarette can be adjusted, and the performance of the electronic cigarette can be improved.

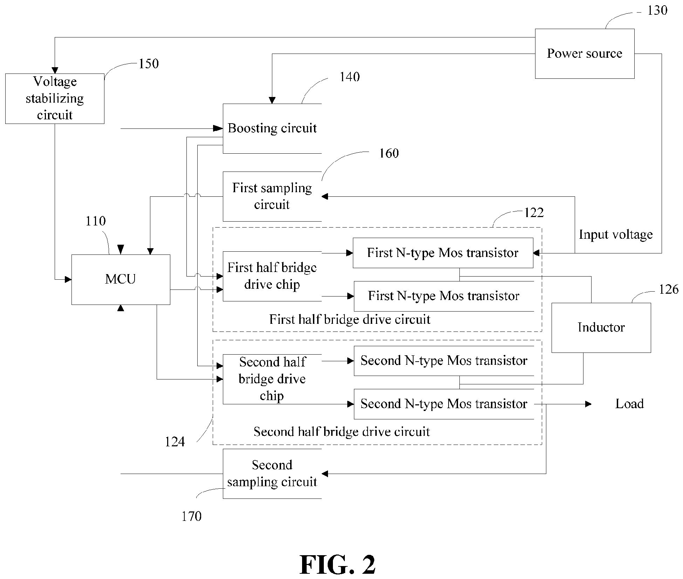

In one embodiment, as shown in FIG. 2, the first half bridge drive circuit 122 includes a first half bridge drive chip and two first N-type MOS transistors. The second half bridge drive circuit 124 includes a second half bridge drive chip and two second N-type MOS transistors. The first half bridge drive chip and the second half bridge drive chip are respectively electrically connected to the MCU 110. The first half bridge drive chip and the second half bridge drive chip are further respectively electrically connected to the output terminal of the boosting circuit 140. The output terminal of the first half bridge drive chip is respectively electrically connected to the two first N-type MOS transistors, one of the two first N-type MOS transistors is electrically connected to the power source 130. The output terminal of the second half bridge drive chip is respectively electrically connected to the two second N-type MOS transistors, an output terminal of one of the two second N-type MOS transistor supplies a voltage to a load. The two first N-type MOS transistors connected in series are connected, through the inductor 126, to the two second N-type MOS transistors connected in series. It should be noted that, in the embodiment, the inductor 126 is respectively connected to the two first N-type MOS transistors and the two second N-type MOS transistors.

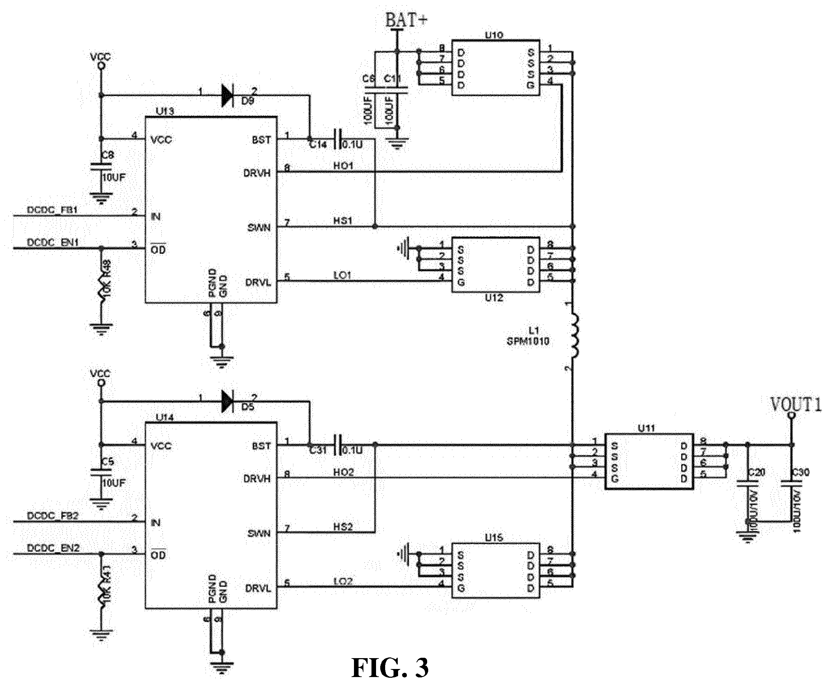

The specific circuit connection of the first half bridge drive circuit 122 and the second half bridge drive circuit 124 is shown in FIG. 3.

The first half bridge drive circuit 122 includes a first half bridge drive chip U13, a capacitor C6, a capacitor C8, a capacitor C11, a capacitor C14, and a diode D9. Two first N-type MOS transistors U10 and U12 form a first half bridge, the input terminal of the first half bridge is electrically connected to the ground through the capacitor C6 and the capacitor C11 for filtering the input voltage. The two first N-type MOS transistors U10 and U12 are respectively electrically connected to the first half bridge drive chip U13. The first half bridge drive chip U13 is electrically connected to the boosting circuit 140, and the first half bridge drive chip U13 is electrically connected to the capacitor C8 for filtering. Pin 4 of the first half bridge drive chip U13 is further electrically connected to pin 1 through the diode D9 for charging the capacitor C14 electrically connected to the pin 1. The capacitor C14 is electrically connected to the output terminal of the first half bridge and pin 7 of the first half bridge drive chip U13. Pin 2 and pin 3 of the first half bridge driver chip U13 are respectively electrically connected to the MCU 110. The MCU 110 sends the second voltage control signal to control the output of the first half bridge drive chip U13. The first half bridge composed of the two first N-type MOS transistors U10 and U12 cooperates with the inductor L1 to reduce the voltage.

The second half bridge drive circuit 124 includes a second half bridge drive chip U14, a capacitor C5, a capacitor C20, a capacitor C30, a capacitor C31, and a diode D5. Two second N-type MOS transistors U11 and U15 form a second half bridge, the input terminal of the second half bridge is electrically connected to the ground through the capacitor C20 and the capacitor C30, for filtering the input voltage. The two second N-type MOS transistors U11 and U15 are respectively electrically connected to the second half bridge drive chip U14. The second half bridge drive chip U14 is electrically connected to the boosting circuit 140, the second half bridge drive chip U14 is electrically connected to the capacitor C5 for filtering. The pin 4 of the second half bridge drive chip U14 is further electrically connected to the pin 1 via the diode D5 for charging the capacitor C31 electrically connected to the pin 1. The capacitor C31 is electrically connected to the output terminal of the second half bridge and connected to pin 7 of the second half bridge drive chip U14. Pin 2 and pin 3 of the second half bridge drive chip U14 are respectively electrically connected to the MCU 110, the MCU 110 sends the second voltage control signal to control the output of the second half bridge drive chip U14. The output terminals of the two half bridges are connected by the inductor L1. The second half bridge composed of the two second N-type MOS transistors U11 and U15 cooperates with the inductor L1 to act as a booster.

The MCU 110 controls the duration of the turn-on and turn-off of the MOS transistors through the half-bridge drive circuit to achieve buck-boost. The MCU 110 determines whether a buck output or a boost output is needed according to the sampling information, and continuously adjusts the PWM control signal to ensure that the output power reaches the set value.

The model of the first half bridge drive chip U13 and the model of the second half bridge drive chip U14 are the same. Specifically, the model of the first half bridge drive chip U13 and the model of the second half bridge drive chip U14 are both ADP3110A. The MOS drive chips can accelerate the turn-on and turn-off of the MOS transistors and improve the power supply efficiency. Of course, other models of chips that can implement this function can also be used. In other embodiments not shown, the first half bridge drive chip U13 and the second half bridge driver chip U14 are different models.

The first N-type MOS transistor and the second N-type MOS transistor are the same model. A model of the MOS transistor is SIRA04DP, which has a small on-resistance and a high power, and can minimize the loss in the power conversion of the electronic cigarette. In other embodiments, optionally, the first N-type MOS transistor and the second N-type MOS transistor are different models.

A model of the inductor 126 can be MS1004-R68M, which has the advantages of wide frequency range, high current resistance and good magnetic shielding effect. Of course, this is not a limitation on the types of the MOS transistor and the inductor, other types of components that can achieve the intended function are also practicable. In addition, the MOS transistor and the inductor may determine the maximum output power of the product. The MS1004-R68M inductor 126 is particularly suitable for high-power output of electronic cigarettes to avoid unnecessary loss.

In another embodiment not shown, the present disclosure further provides an electronic cigarette including any one of the above drive circuits.

Those skilled in the art will also be appreciated that, the various illustrative logical blocks, modules, circuits, and algorithm steps herein described in this disclosure may be implemented by means of electronic hardware, computer software, or both. To clearly illustrate this interchangeability for hardware and software, various illustrative components, blocks, modules, circuits, and steps have been generally described. This functionality is implemented by software or hardware depending on the specific application and the design constraints imposed on the overall system. For each particular application, those skilled in the art can adopt various ways to implement the described functionality, but such implementation decisions should not be interpreted as causing a departure from the scope of the disclosure.

While the foregoing disclosure shows exemplary embodiments of the present disclosure, it should be understood that various changes and modifications may be made without departing from the scope of the appended claims.

The functions, steps and/or actions of the method claims according to the embodiments of the disclosure described herein are not required to be performed in any particular order. In addition, although elements of the disclosure may be described or claimed in the form of an individual, many are contemplated, unless explicitly limited to the singular.

Although the description described above has been made in accordance with the embodiments of the present disclosure, it will be understood by those skilled in the art that various improvements may be made to the embodiments of the present disclosure described above without departing from the scope of the appended claims.

## Claims

1. A drive circuit for electronic cigarettes, comprising: an MCU (110), a buck-boost drive circuit (120), a power source (130), a first sampling circuit (160) and a second sampling circuit (170), wherein the buck-boost drive circuit (120) is electrically connected to the MCU (110), the MCU (110) and the buck-boost drive circuit (120) are respectively electrically connected the power source (130), the buck-boost drive circuit (120) comprises a first half bridge drive circuit (122) and a second half bridge drive circuit (124) respectively electrically connected to the MCU (110), the first half bridge drive circuit (122) is electrically connected to the second half bridge drive circuit (124) through an inductor (126), one end of the first sampling circuit (160) is electrically connected to an input terminal of the first half bridge drive circuit (122), through which the power source (130) supplies power to the first half bridge drive circuit (122), the other end of the first sampling circuit (160) is electrically connected to the MCU (110), one end of the second sampling circuit (170) is electrically connected to an output terminal of the second half bridge drive circuit (124), and the other end of the second sampling circuit (170) is electrically connected to the MCU (110);
the drive circuit further comprises a boosting circuit (140), the boosting circuit (140) is respectively electrically connected to the MCU (110) and the power source (130), the boosting circuit (140) is further respectively electrically connected to the first half bridge drive circuit (122) and the second half bridge drive circuit (124);
the first sampling circuit (160) is configured to detect an input voltage of the first half bridge drive circuit (122) supplied by the power source (130), the second sampling circuit (170) is configured to detect an output voltage of the second half bridge drive circuit (124), the MCU (110) is configured to send a first voltage control signal and a second voltage control signal according to the voltages fed back by the first sampling circuit (160) and the second sampling circuit (170);
the boosting circuit (140) is configured to boost a voltage of the power source (130) according to the first voltage control signal, to provide an operating voltage for the buck-boost drive circuit (120);
the buck-boost drive circuit (120) is arranged to boost or lower a load voltage according to the second voltage control signal;
the first half bridge drive circuit (122) comprises a first half bridge drive chip U13, a capacitor C14, a diode D9 and two first N-type MOS transistors U10, U12; the second half bridge drive circuit (124) comprises a second half bridge drive chip U14, a capacitor C31, a diode D5 and two second N-type MOS transistors U11, U15; wherein each half bridge drive chip comprises an IN pin, an OD pin, a VCC pin, a BST pin, an SWN pin, a DRVH and a DRVL pin;
the IN pin and the O̅D̅ pin of the first half bridge drive chip U13 are connected to the MCU (110), the VCC pin of the first half bridge drive chip U13 is connected to the boosting circuit (140), the VCC pin of the first half bridge drive chip U13 is further connected to the BST pin of the first half bridge drive chip U13 through the diode D9, the capacitor C14 is connected between the BST pin of the first half bridge drive chip U13 and the SWN pin of the first half bridge drive chip U13, the DRVH pin of the first half bridge drive chip U13 is connected to the G pin of the first N-type MOS transistor U10, the DRVL pin of the first half bridge drive chip U13 is connected to the G pin of the first N-type MOS transistor U12, the SWN pin of the first half bridge drive chip U13 is connected to a first end of the inductor (126);
the IN pin and the O̅D̅ pin of the second half bridge driver chip U14 are connected to the MCU (110), the VCC pin of the second half bridge drive chip U14 is connected to the boosting circuit (140), the VCC pin of the second half bridge drive chip U14 is further connected to the BST pin of the second half bridge drive chip U14 through the diode D5, the capacitor C31 is connected between the BST pin of the second half bridge drive chip U14 and the SWN pin of the second half bridge drive chip U14, the DRVH pin of the second half bridge drive chip U14 is connected to the G pin of the second N-type MOS transistor U11, the DRVL pin of the second half bridge drive chip U14 is connected to the G pin of the second N-type MOS transistor U15, the SWN pin of the second half bridge drive chip U14 is connected to a second end of the inductor (126);
the S pin of the first N-type MOS transistor U10 and the D pin of the first N-type MOS transistor U12 are connected to the first end of the inductor (126), the S pin of the second N-type MOS transistor U11 and the D pin of the second N-type MOS transistor U15 are connected to the second end of the inductor (126);
the D pin of the first N-type MOS transistor U10 is connected to the power source (130), the D pin of the second N-type MOS transistor U11 is used to supply a voltage (Vout1) to a load.

2. The drive circuit according to claim 1, wherein the drive circuit further comprises a voltage stabilizing circuit (150), the voltage stabilizing circuit (150) is electrically connected to the power source (130) and the MCU (110).

3. An electronic cigarette comprising a drive circuit according to any one of claims 1-2.

## Patentansprüche

1. Treiberschaltung für elektronische Zigaretten, umfassend: eine Mikrocontroller-Einheit (MCU) (110), eine Buck-Boost-Treiberschaltung (120), eine Spannungsquelle (130), eine erste Abtastschaltung (160) und eine zweite Abtastschaltung (170), wobei die Buck-Boost-Treiberschaltung (120) elektrisch mit der MCU (110) verbunden ist, die MCU (110) und die Buck-Boost-Treiberschaltung (120) jeweils elektrisch mit der Spannungsquelle (130) verbunden sind, die Buck-Boost-Treiberschaltung (120) eine erste Halbbrücken-Treiberschaltung (122) und eine zweite Halbbrücken-Treiberschaltung (124) umfasst, die jeweils elektrisch mit der MCU (110) verbunden sind, wobei die erste Halbbrücken-Treiberschaltung (122) elektrisch mit der zweiten Halbbrücken-Treiberschaltung (124) über einen Induktor (126) verbunden ist, ein Ende der ersten Abtastschaltung (160) elektrisch mit dem Eingangsanschluss der ersten Halbbrücken-Treiberschaltung (122) verbunden ist, durch die die Spannungsquelle (130) Spannung an die erste Halbbrücken-Treiberschaltung (122) liefert, das andere Ende der ersten Abtastschaltung (160) elektrisch mit der MCU (110) verbunden ist, ein Ende der zweiten Abtastschaltung (170) elektrisch mit dem Ausgangsanschluss der zweiten Halbbrücken-Treiberschaltung (124) verbunden ist, und das andere Ende der zweiten Abtastschaltung (170) elektrisch mit der MCU (110) verbunden ist;
die Treiberschaltung umfasst ferner eine Booster-Schaltung (140), wobei die Booster-Schaltung (140) jeweils elektrisch mit der MCU (110) und der Spannungsquelle (130) verbunden ist, die Booster-Schaltung (140) ferner jeweils elektrisch mit der ersten Halbbrücken-Treiberschaltung (122) und der zweiten Halbbrücken-Treiberschaltung (124) verbunden ist;
die erste Abtastschaltung (160) so konfiguriert ist, um eine Eingangsspannung der ersten Halbbrücken-Treiberschaltung (122) zu erkennen, die von der Spannungsquelle (130) geliefert wird, und die zweite Abtastschaltung (170) so konfiguriert ist, um eine Ausgangsspannung der zweiten Halbbrücken-Treiberschaltung (124) zu erkennen, wobei die MCU (110) so konfiguriert ist, um ein erstes Spannungssteuersignal und ein zweites Spannungssteuersignal gemäß den Spannungen zu senden, die von der ersten Abtastschaltung (160) und der zweiten Abtastschaltung (170) zurückgeführt werden;
die Booster-Schaltung (140) so konfiguriert ist, um die Spannung der Spannungsquelle (130) gemäß dem ersten Spannungssteuersignal zu verstärken, um eine Betriebsspannung für die Buck-Boost-Treiberschaltung (120) bereitzustellen;
die Buck-Boost-Treiberschaltung (120) so angeordnet ist, dass sie eine Lastspannung gemäß dem zweiten Spannungssteuersignal anheben oder absenken kann;
die erste Halbbrücken-Treiberschaltung (122) einen ersten Halbbrücken-Treiberchip U13, einen Kondensator C14, eine Diode D9 und zwei erste N-Typ-MOS-Transistoren U10, U12 umfasst; die zweite Halbbrücken-Treiberschaltung (124) einen zweiten Halbbrücken-Treiberchip U14, einen Kondensator C31, eine Diode D5 und zwei zweite N-Typ-MOS-Transistoren U11, U15 umfasst; wobei jeder Halbbrücken-Treiberchip einen IN-Pin, einen OD-Pin, einen VCC-Pin, einen BST-Pin, einen SWN-Pin, einen DRVH- und einen DRVL-Pin umfasst;
der IN-Pin und der OD-Pin des ersten Halbbrücken-Treiberchips U13 mit der MCU (110) verbunden sind, der VCC-Pin des ersten Halbbrücken-Treiberchips U13 mit der Booster-Schaltung (140) verbunden ist, der VCC-Pin des der erste Halbbrücken-Treiberchip U13 ferner über die Diode D9 mit dem BST-Pin des ersten Halbbrücken-Treiberchips U13 verbunden ist, der Kondensator C14 zwischen dem BST-Pin des ersten Halbbrücken-Treiberchips U13 und dem SWN-Pin des ersten Halbbrücken-Treiberchips U13 verbunden ist, der DRVH-Pin des ersten Halbbrücken-Treiberchips U13 mit dem G-Pin des ersten N-Typ-MOS-Transistors U10 verbunden ist, der DRVL-Pin des ersten Halbbrücken-Treiberchips U13 mit dem G-Pin des ersten N-Typ-MOS-Transistors U12 verbunden ist, der SWN-Pin des ersten Halbbrücken-Treiberchips U13 mit dem ersten Ende des Induktors (126) verbunden ist;
der IN-Pin und der OD-Pin des zweiten Halbbrücken-Treiberchips U14 mit der MCU (110) verbunden sind, der VCC-Pin des zweiten Halbbrücken-Treiberchips U14 mit der Boosting-Schaltung (140) verbunden ist, der VCC-Pin des zweiten der Halbbrücken-Treiberchip U14 ferner über die Diode D5 mit dem BST-Pin des zweiten Halbbrücken-Treiberchips U14 verbunden ist, der Kondensator C31 zwischen dem BST-Pin des zweiten Halbbrücken-Treiberchips U14 und dem SWN-Pin des zweiten Hatbbrücken-Treiberchips U14 verbunden ist, der DRVH-Pin des zweiten Halbbrücken-Treiberchips U14 mit dem G-Pin des zweiten N-Typ-MOS-Transistors U11 verbunden ist, der DRVL-Pin des zweiten Halbbrücken-Treiberchips U14 mit dem G-Pin des zweiten N-Typ-MOS-Transistors U15 verbunden ist, wobei der SWN-Pin des zweiten Halbbrücken-Treiberchips U14 mit dem zweiten Ende des Induktors (126) verbunden ist;
der S-Pin des ersten N-Typ-MOS-Transistors U10 und der D-Pin des ersten N-Typ-MOS-Transistors U12 mit dem ersten Ende des Induktors (126) verbunden sind, der S-Pin des zweiten N-Typ-MOS-Transistors U11 und der D-Pin des zweiten N-Typ-MOS-Transistors U15 mit dem zweiten Ende des Induktors (126) verbunden sind;
der D-Pin des ersten N-Typ-MOS-Transistors U10 mit der Spannungsquelle (130) verbunden ist, der D-Pin des zweiten N-Typ-MOS-Transistors U11 verwendet wird, um die Spannung (Vout1) einer Last zuzuführen.

2. Treiberschaltung nach Anspruch 1, wobei die Treiberschaltung ferner eine Spannungsstabitisierungsschaltung (150) umfasst, wobei die Spannungsstabilisierungsschaltung (150) elektrisch mit der Spannungsquelle (130) und der MCU (110) verbunden ist.

3. Elektronische Zigarette mit einer Treiberschaltung nach einem der Ansprüche 1-2.

## Revendications

1. Un circuit d'entraînement pour cigarettes électroniques, comprenant : un MCU (110), un circuit d'entraînement buck-boost (120), une source d'alimentation (130), un premier circuit d'échantillonnage (160) et un second circuit d'échantillonnage (170), dans lequel le circuit d'entraînement buck-boost (120) est connecté électriquement au MCU (110), le MCU (110) et le circuit d'entraînement buck-boost (120) sont respectivement connectés électriquement à la source d'alimentation (130), le circuit d'entraînement buck-boost ( 120) comprend un premier circuit d'entraînement en demi-pont (122) et un deuxième circuit d'entraînement en demi-pont (124) respectivement connectés électriquement au MCU (110), le premier circuit d'entraînement en demi-pont (122) est connecté électriquement au deuxième entraînement en demi-pont (124) par l'intermédiaire d'une inductance (126), une extrémité du premier circuit d'échantillonnage (160) est connectée électriquement à une borne d'entrée du premier circuit d'entraînement en demi-pont (122), à travers laquelle la source d'alimentation (130) alimente le premier circuit d'entrainement en demi-pont (122), l'autre extrémité du premier circuit d'échantillonnage (160) est connectée électriquement au MCU (110), une extrémité du second circuit d'échantillonnage (170) est connectée électriquement à une borne de sortie du second circuit d'entrainement en demi-pont (124), et l'autre extrémité du second circuit d'échantillonnage (170) est connecté électriquement au MCU (110) ;
le circuit d'entraînement comprend en outre un circuit d'amplification (140), le circuit d'amplification (140) est respectivement connecté électriquement au MCU (110) et à la source d'alimentation (130), le circuit d'amplification (140) est en outre respectivement connecté électriquement au premier circuit d'entrainement en demi-pont (122) et au second circuit d'entraînement en demi-pont (124) ;
le premier circuit d'échantillonnage (160) est configuré pour détecter une tension d'entrée du premier circuit d'entrainement en demi-pont (122)
alimenté par la source d'alimentation (130), le second circuit d'échantillonnage (170) est configuré pour détecter une tension de sortie du second circuit d'entrainement en demi-pont (124), le MCU (110) est configuré pour envoyer un premier signal de commande de tension et un deuxième signal de commande de tension en fonction des tensions renvoyées par le premier circuit d'échantillonnage (160) et le deuxième circuit d'échantillonnage (170) ;
le circuit d'amplification (140) est configuré pour élever une tension de la source d'alimentation (130) selon le premier signal de commande de tension, afin de fournir une tension de fonctionnement pour le circuit d'entrainement buck-boost (120) ;
le circuit d'entraînement buck-boost (120) est conçu pour augmenter ou abaisser une tension de charge selon le deuxième signal de commande de tension ;
le premier circuit de commande en demi-pont (122) comprend une première puce d'entrainement en demi-pont U13, un condensateur C14, une diode D9 et deux premiers transistors MOS de type N U10, U12; le deuxième circuit d'entrainement en demi-pont (124) comprend une deuxième puce d'entrainement en demi-pont U14, un condensateur C31, une diode D5 et deux seconds transistors MOS de type N U11, U15 ; dans lequel chaque puce d'entraînement en demi-pont comprend une broche IN, une broche OD, une broche VCC, une broche BST, une broche SWN, une broche DRVH et une broche DRVL ;
la broche IN et la broche OD de la première puce d'entraînement en demi-pont U13 sont connectées au MCU (110), la broche VCC de la première puce d'entraînement en demi-pont U13 est connectée au circuit d'amplification (140), la broche VCC de la première puce d'entrainement en demi-pont U13 est en outre connectée à la broche BST de la première puce d'entrainement en demi-pont U13 par l'intermédiaire de la diode D9, le condensateur C14 est connecté entre la broche BST de la première puce d'entrainement en demi-pont U13 et la broche SWN de la première puce d'entrainement en demi-pont U13, la broche DRVH de la première puce d'entrainement en demi-pont U13 est connectée à la broche G du premier transistor MOS de type N U10, la broche DRVL de la première puce d'entrainement en demi-pont U13 est connectée à la broche G du premier transistor MOS de type N U12, la broche SWN de la première puce d'entrainement en demi-pont U13 est connectée à une première extrémité de l'inducteur (126) ;
la broche IN et la broche OD de la seconde puce de d'entrainement en demi-pont U14 sont connectées au MCU (110), la broche VCC de la seconde puce de d'entrainement en demi-pont U14 est connectée au circuit d'amplification (140), la broche VCC de la seconde puce d'entraînement en demi-pont U14 est en outre connectée à la broche BST de la deuxième puce d'entraînement en demi-pont U14 par l'intermédiaire de la diode D5, le condensateur C31 est connecté entre la broche BST de la deuxième puce d'entraînement en demi-pont U14 et la broche SWN de la deuxième puce d'entrainement en demi-pont U14, la broche DRVH de la seconde puce d'entrainement en demi-pont U14 est connectée à la broche G du second transistor MOS de type N U11, la broche DRVL de la seconde puce d'entrainement en demi-pont U14 est connectée à la broche G du second transistor MOS de type N U15, la broche SWN de la seconde puce de d'entrainement en demi-pont U14 est connectée à une seconde extrémité de l'inducteur (126) ;
la broche S du premier transistor MOS de type N U10 et la broche D du premier transistor MOS de type N U12 sont connectées à la première extrémité de l'inductance (126), la broche S du second transistor MOS de type N U11 et la broche D du second transistor MOS de type N U15 est connectée à la deuxième extrémité de l'inducteur (126) ;
la broche D du premier transistor MOS de type N U10 est connectée à la source d'alimentation (130), la broche D du second transistor MOS de type N U11 est utilisée pour fournir une tension (Vout1) à une charge.

2. Le circuit d'entraînement selon la revendication **1**, dans laquelle le circuit d'entrainement comprend en outre un circuit de stabilisation de tension (150), le circuit de stabilisation de tension (150) est connecté électriquement à la source d'alimentation (130) et au MCU (110).

3. Une cigarette électronique comprenant un circuit d'entrainement selon l'une des revendications 1-2.
